# DEMANDE DE BREVET EUROPEEN

(11) **EP 0 538 119 A1**
(43) Date de publication de la demande: **21.04.1993**
(21) Numéro de dépôt: 92402801.2
(22) Date de dépôt: 14.10.1992
(51) Int. Cl.: H04Q 11/04, H04M 11/06

(54) **Procédé de communication entre un commutateur numérique et une pluralité de terminaux**

(30) Priorité: 16.10.1991 FR 9112754
(71) Demandeur: SAT (Société Anonyme de Télécommunications), F-75116 Paris (FR)
(72) Inventeur: Bourgoin, Alain, F-75625 Paris Cédex 13 (FR); Brouard, Germain Guy, F-75625 Paris Cédex 13 (FR)
(74) Mandataire: Bloch, Gérard

(57) **Abrégé**

La présente invention a pour objet un procédé de communication entre un commutateur numérique (1) et une pluralité de terminaux, caractérisé par un multiplexage de terminaux (40, 41) en mode stimuli et de terminaux (3) en mode fonctionnel.

## Description

La présente invention concerne un procédé de communication entre un commutateur numérique et une pluralité de terminaux.

Les commutateurs numériques, et plus généralement les réseaux numériques à intégration de services, ont considérablement augmenté les possibilités d'accès des terminaux à des services divers. Il en résulte toutefois une complexification croissante de ces mêmes terminaux par adjonction de plus en plus "d'intelligence". Ceci se traduit par des capacités de mémoires vives ou mortes et des possibilités de calculs, et par conséquent des coûts, croissant dans la même mesure.

En outre, la complexité de ces terminaux nécessite une maintenance accrue qui ne peut généralement s'effectuer qu'au niveau du terminal lui-même, puisque c'est ce dernier qui supporte la gestion de la plupart des fonctions.

On sait également que, dans les réseaux numériques à intégration de service, sont prévues des procédures "à stimuli" utilisées pour la commande des compléments de service.

Alors que lorsqu'un terminal est en mode fonctionnel l'activation des fonctions s'effectue par échange de messages fonctionnels avec le commutateur, dans un terminal en mode stimuli, celui-ci et le commutateur n'échangent que des chaînes de caractères directement liées à la physique du terminal.

La présente invention vise à fournir un procédé de communication entre un commutateur numérique et une pluralité de terminaux autorisant une simplification et par conséquent une réduction des coûts de ces terminaux.

A cet effet, l'invention a pour objet un procédé de communication entre un commutateur numérique et une pluralité de terminaux, caractérisé par un multiplexage de terminaux en mode stimuli et de terminaux en mode fonctionnel.

Les terminaux en mode stimuli, notamment des postes téléphoniques, peuvent par conséquent être grandement simplifiés ; donc d'une part leur coût est réduit du fait que l'intelligence est concentrée, en ce qui les concerne, au niveau du commutateur ; d'autre part, la maintenance en est grandement simplifiée .

Plus particulièrement, selon l'invention, une liaison de données peut être établie entre le commutateur et un terminal en mode stimuli à l'initialisation de ce dernier.

Dans un mode de mise en oeuvre particulier de l'invention, la discrimination entre les messages échangés entre le commutateur et les terminaux en mode stimuli, et ceux échangés entre le commutateur et les terminaux en mode fonctionnel, est effectuée par le discriminateur de protocole des messages.

Plus particulièrement, un terminal en mode stimuli peut émettre à son initialisation un message d'identité à destination du commutateur, comportant un élément d'information lui indiquant le protocole de communication à utiliser.

Au niveau des postes en mode stimuli, le niveau 2 de l'interface (protocole de liaison de données) est de préférence simplifié, toujours dans le but de limiter l'intelligence nécessaire au niveau de ces terminaux.

C'est ainsi notamment que l'on peut n'utiliser que des transferts d'informations avec accusé de réception entre le commutateur et un terminal en mode stimuli.

De même, l'affectation de l'identification de point d'extrémité terminal (TEI) d'un terminal en mode stimuli est de préférence dynamique.

Dans le cas où plusieurs terminaux en mode stimuli sont raccordés au même bus So qu'un ou plusieurs terminaux en mode fonctionnel, chaque terminal en mode stimuli peut émettre à son initialisation un message d'identité à destination du commutateur comportant une information de sous-adresse afin de le distinguer des autres terminaux en mode stimuli.

Dans le cas où le message d'identité est rejeté, le terminal peut répèter ce message, éventuellement après une temporisation.

On décrira maintenant à titre d'exemple non limitatif un mode de réalisation particulier de l'invention en référence aux dessins schématiques annexés dans lesquels :
- la figure 1 représente une installation selon l'invention ;
- la figure 2 illustre le format des messages échangés ; et
- la figure 3 est un organigramme de l'initialisation.

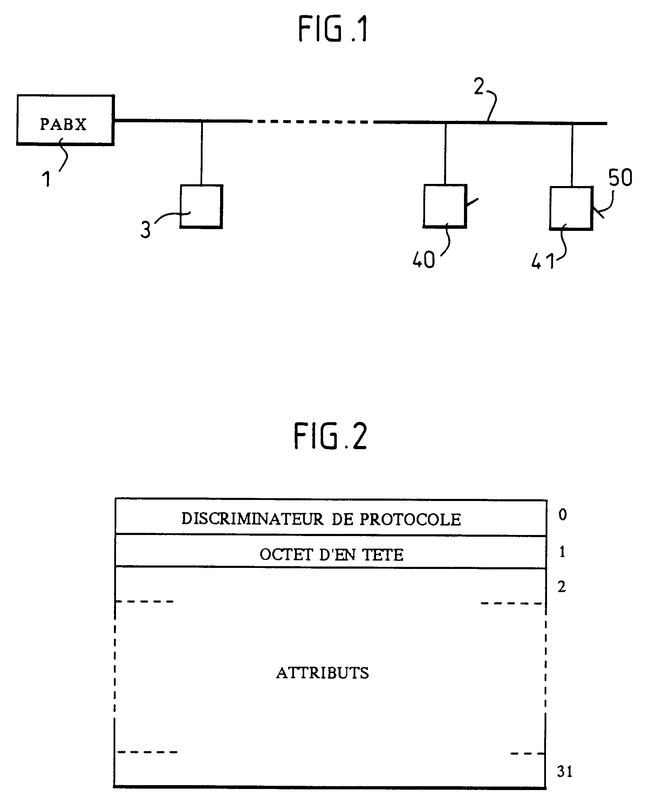

La figure 1 illustre une installation mettant en oeuvre le procédé selon l'invention

On voit sur cette figure un auto-commutateur privé 1 relié par un bus 2 à un certain nombre de terminaux 3 en mode fonctionnel, et à deux terminaux 40 et 41 en mode stimuli. Dans ce qui suit sont décrites les particularités des terminaux à stimuli.

Le niveau physique (niveau 1) est conforme à la norme I 430 du CCITT.

Le niveau 2 est dèrivé des normes I 440 et I 441 du CCITT, certains éléments du protocole n'ayant toutefois pas été implantés pour réduire au maximum la taille du logiciel.

Plus particulièrement, sur le "SAPI S" (point d'accès au service signalisation), les services de connexion de liaison de données avec diffusion et de transfert d'information sans accusé de réception ne sont pas mis en oeuvre. Seul sont utilisés les services de connexion de liaison de donnée point à point et de transfert d'information avec accusé de réception.

Par ailleurs, l'affectation du TEI à un poste en mode stimuli 40 ou 41 est dynamique et, après cette affectation, toute autre valeur que zéro de l'identificateur de point d'accès au service (SAPI) est ignorée pour les terminaux 40 et 41. Ils n'utilisent par conséquent que la signalisation téléphonique.

Les valeurs de paramètres affectés aux terminaux en mode stimuli 40 et 41 sont par exemple les suivantes :
- temporisateur du niveau 1 : 10 secondes
- temporisateur d'activation du niveau 2 : 2 secondes
- temporisateur du niveau 2 : 1 seconde
- temporisateur du message d'identification : 5 secondes

Les fonctions de ces temporisateurs seront explicitées ci-après.

Par ailleurs, seules les trames UI (information non numérotée) de gestion de TEI sont utilisés avec le SAPI 63 et le TEI 127, ou le SAPI 63 et le TEI affecté. Les autres trames UI sont ignorées.

Enfin , la longueur des messages échangés entre le commutateur 1 et les terminaux 40 et 41 est limitée à 32 octets, le groupage de plusieurs messages au sein d'une même unité du service de liaison de données étant interdit dans les deux sens de transmission.

La figure 2 montre le format de tels messages.

Le premier octet du message est constitué par le discriminateur de protocole qui permet d'identifier les messages échangés entre le commutateur 1 et les postes en mode stimuli. A titre d'exemple on peut utiliser comme discriminateur de protocole pour ces messages la valeur hexadécimale 40.

L'octet d'en-tête indique notamment le type de message émis ou reçu par le terminal, ainsi que le numéro de séquence du message en émission , incrémenté à chaque message.

Les messages échangés sont essentiellement de deux types.

Les messages généraux reçus par le terminal visent essentiellement la gestion de l'afficheur, des diodes lumineuses, de la sonnerie, du haut parleur, du micro main-libre, ainsi que le réglage du niveau de l'écouteur. Un tel message peut également demander la connexion d'un canal B.

Les messages généraux reçus par le commutateur 1 sont essentiellement ceux qui l'informent de l'enfoncement d'une touche du clavier d'un poste 40 ou 41, ou du décrochage ou du raccrochage du combiné, ainsi que des évènements détectés sur les modules additifs qu'il est possible de brancher en option sur ces postes.

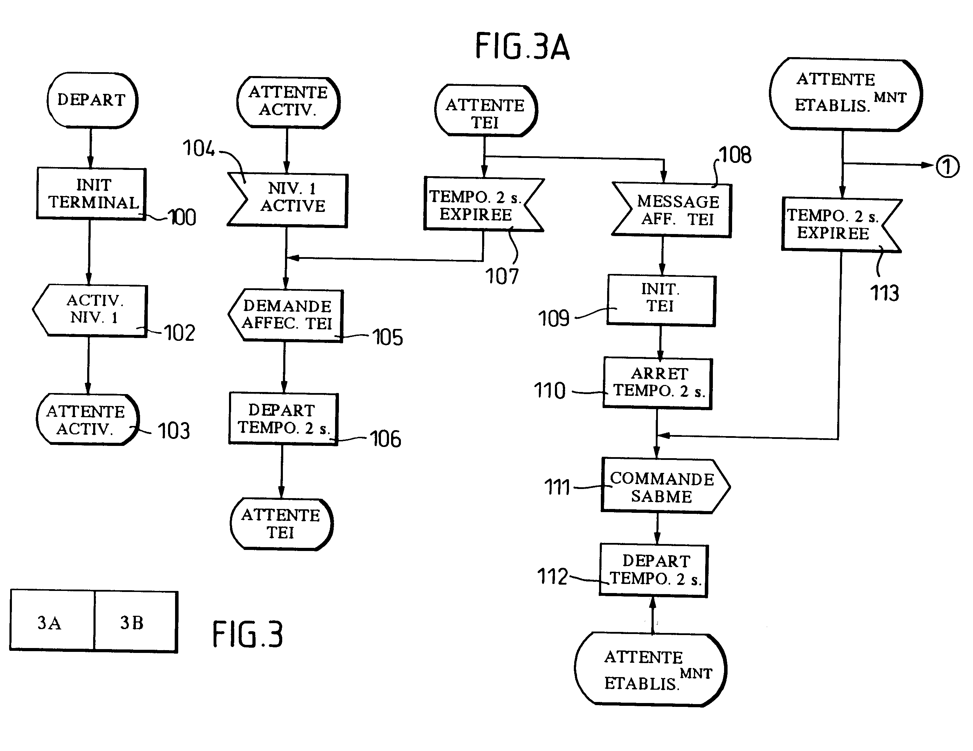

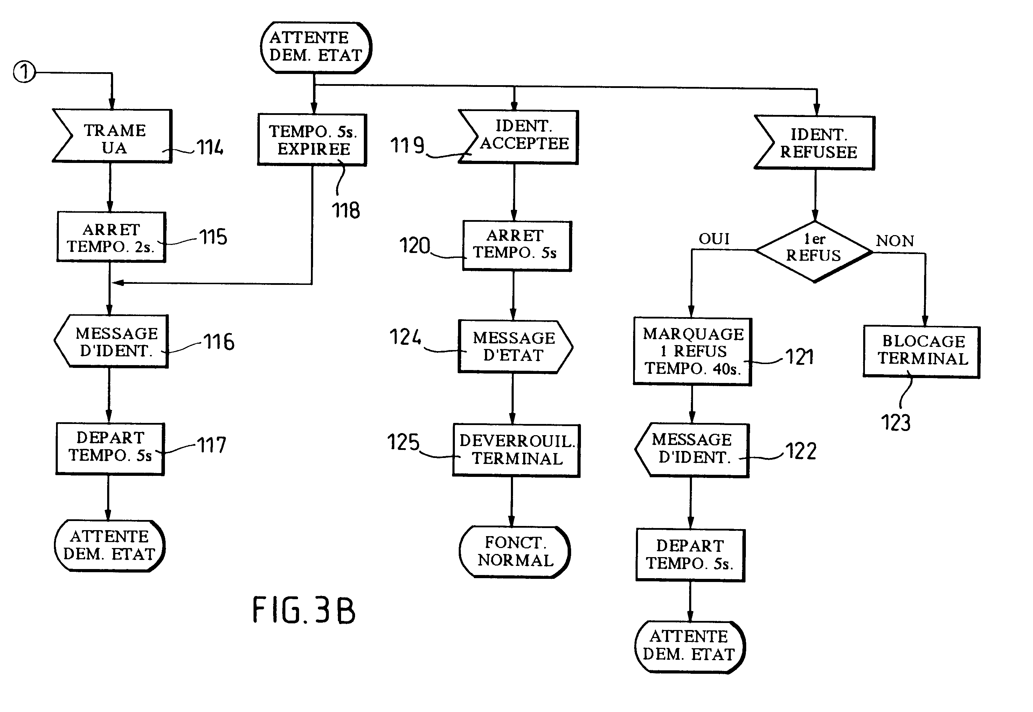

L'autre type de message concerne les messages d'initialisation que l'on décrira maintenant en même temps que le processus d'initialisation, en référence à la figure 3.

Au début de ce processus, le terminal proprement dit est initialisé en 100, c'est à dire placé dans un état de référence.

Ensuite, le terminal fait en 102 une demande d'activation du niveau 1 supervisée par la temporisation du niveau 1, et se place en attente de son activation en 103.

Après la réception en 104 du message d'activation du niveau 1, le terminal envoie en 105 une demande d'affectation de TEI dynamique supervisée par la temporisation d'attente du TEI. A cet effet, cette temporisation est lancée en 106 et, à son expiration en 107, une nouvelle demande d'affectation de TEI est envoyée au commutateur.

A la réception en 108 du message d'affectation de TEI, le terminal initialise le TEI en 109. Il arrête alors en 110 la temporisation d'activation du niveau 2, et essaie en 111 d'ouvrir la liaison de données en envoyant la commande SABME (mise en mode asynchrone équilibré étendu). L'attente de l'établissement de la liaison de données s'effectue sous la supervision de la temporisation d'activation du niveau 2 démarrée en 112 après l'émission de la commande SABME. A l'expiration en 113 de cette temporisation, une nouvelle commande SABME est émise.

La liaison de données est établie en 114 à la réception de la trame UA (accusé de réception non numéroté) et la temporisation d'activation du niveau 2 est arrêtée en 115.

Le terminal envoie alors son message d'identité en 116.

Ce message comprend, outre le discriminateur de protocole qui est identique pour tous les terminaux fonctionnant en mode stimuli, un code constructeur indiquant au commutateur quel protocole devra être utilisé pour la communication avec ce terminal particulier.

Il comprend également une sous-adresse constituée dans le cas présent d'un seul bit dont la valeur est mise à zéro ou à un à l'aide d'un interrupteur manuel 50 (figure 1) monté sur les terminaux en mode stimuli. Il est ainsi possible de connecter deux terminaux en mode stimuli au même bus. Bien entendu plus de deux terminaux pourraient être connectés sur le bus sous réserve que les interrupteurs et la sous-adresse associée dans le message d'identité puissent prendre plus de deux valeurs.

Après l'émission du message d'identité, le terminal démarre la temporisation du message d'identité en 117. A l'expiration en 118 de cette temporisation, le terminal réémet son message d'identité.

Le commutateur répond au message d'identité par un message de demande d'état qui est reçu en 119. A la réception de ce message, la temporisation du message d'identité est arrêtée en 120.

Le message de demande d'état a une double fonction. Il informe tout d'abord le terminal de l'acceptation de son message d'identité. Le message d'identité est rejeté en cas de protocole incompatible ou en cas de double définition de la sous-adresse. Dans ce cas, le poste arme une temporisation de 40 secondes en 121 (au 1er rejet). Puis il renouvelle en 122 (une seule fois) la demande d'identité. S'il y a un deuxième rejet, il se bloque définitivement en 123 : le déblocage ne peut se faire que par désenfichage puis réenfichage du poste.

Cette procédure de rejet permet de se protéger contre les divers conflits pouvant se produire dans la procédure de démarrage :
- lors d'enfichages et de désenfichages répétés du même poste ;
- lorsque deux postes ayant - par erreur - la même sous-adresse sont connectés au bus.

Le message de demande d'état a également pour fonction d'initialiser un certain nombre de fonctions du terminal telles que les numéros de séquence, les buffers de transmission, l'afficheur et les diodes de signalisation.

En réponse au message de demande d'état, le terminal émet en 124 un message d'état comportant notamment l'état de son combiné ainsi que divers paramètres d'identification, sa version ou les types d'option dont il dispose.

Le terminal passe alors en 125 dans un état déverrouillé où le clavier est scruté et les messages du protocole à stimuli sont interprétés et supervisés par le temporisateur du niveau 2.

Les fonctions gérées par le terminal peuvent donc être très limitées et celui-ci être par conséquent très simplifié par rapport à un terminal en mode fonctionnel.

De telles fonctions gérées localement peuvent par exemple être celle qui coupe le haut-parleur et le micros lors du raccrochage du combiné, celle qui arrête la sonnerie lors du décrochage du combiné, ou celle qui invalide la sonnerie lorsque le combiné est décroché.

## Revendications

1. Procédé de communication entre un commutateur numérique (1) et une pluralité de terminaux, caractérisé par un multiplexage de terminaux (40, 41) en mode stimuli et de terminaux (3) en mode fonctionnel.

2. Procédé selon la revendication 1, dans lequel une liaison de données est établie entre le commutateur et un terminal en mode stimuli à l'initialisation de ce dernier.

3. Procédé selon l'une quelconque des revendications 1 et 2, dans lequel la discrimination entre les messages échangés entre le commutateur et les terminaux en mode stimuli et ceux échangés entre le commutateur et les terminaux en mode fonctionnel est effectuée par le discriminateur de protocole des messages.

4. Procédé selon l'une quelconque des revendications 1 à 3, dans lequel un terminal en mode stimuli émet, à son initialisation, un message d'identité à destination du commutateur, comportant un élément d'information lui indiquant le protocole de communication à utiliser.

5. Procédé selon l'une quelconque des revendications 1 à 4, dans lequel seuls sont utilisés des transferts d'information avec accusé de réception entre le commutateur et un terminal en mode stimuli.

6. Procédé selon l'une quelconque des revendications 1 à 5, dans lequel un terminal en mode stimuli émet, à son initialisation, un message d'identité à destination du commutateur, comportant une information de sous-adresse.

7. Procédé selon l'une quelconque des revendications 4 et 6 dans lequel un terminal en mode stimuli, lorsque son message d'identité a été rejeté, répète ce message une seule fois.

8. Procédé selon la revendication 7 dans lequel un terminal en mode stimuli répète son message d'identité après une temporisation.
